# EUROPEAN PATENT SPECIFICATION

(11) **EP 2 108 854 B1**
(45) Date of publication and mention of the grant of the patent: **30.05.2012**
(21) Application number: 09251059.3
(22) Date of filing: 08.04.2009
(51) Int. Cl.: F16D 7/04

(54) **Power take-off apparatus and clutch**
Zapfwelleneinheit und Kupplung
Appareil de prise de force et embrayage

(30) Priority: 11.04.2008 GB 0806670
(43) Date of publication of application: 14.10.2009
(73) Proprietor: Winton Engineering Limited, Sheerwater Woking Surrey GU21 5SB (GB)
(72) Inventor: Winton, William Robert, Woking Surrey GU21 5SB (GB); McGladdery, Robert John, Old Woking, Woking, Surrey GU22 9EX (GB)
(74) Representative: Merryweather, Colin Henry

(56) References cited:
- DE-A1- 1 580 323
- JP-A- 2005 096 584
- US-A- 2 041 445
- US-A- 2 787 355
- US-A- 3 433 337

## Description

This invention relates to a power take-off apparatus, and a clutch for use therein.

Power take-off apparatuses are sold for fitting to vehicles such as trucks or fire engines and also for lighter vehicles such as lorries, cars and vans. In the case of such lighter vehicles, it is desirable for power take-off apparatuses to be as small as possible, whilst still producing the required amount of power. Typically such power take-off apparatuses transmit powers in the range of between about 5 and about 35 kW, and have clutch plates with diameters in the range of from about 10 to about 20 cm.

Commonly, a power take-off apparatus for use in a lighter vehicle, comprises an electro-magnetic clutch. Such clutches have the advantage of being reliable, as long as they are used regularly. However, such clutches suffer from the problem that the solenoid can burn out. This can occur when the faces of the clutch plates become corroded through extended lack of use, or when the plates become otherwise dirty. The presence of the corrosion or dirt can lead to slippage of the clutch plates when the clutch is in use, which causes overheating and subsequent burnout of the solenoid. Also, overloading the clutch in use can lead to slippage and solenoid burnout.

Therefore, there is a problem of providing a clutch for use in a power take-off apparatus that is both reliable in use, and does not slip.

US-A-3,433,337 discloses a power take off and clutch in accordance with the pre-characterising sections of claims 1 and 14 appended hereto.

According to a first aspect of the present invention there is provided a power take-off apparatus, comprising: a rotatable power input member capable of being rotated by an engine; a rotatable power output member capable of driving an external apparatus; and a clutch for transmitting power from the rotatable power input member to the rotatable power output member, said clutch comprising a driving clutch plate and a driven clutch plate, each rotatable about a common axis, said driving clutch plate being for driving said driven clutch plate in a forward direction about the axis, wherein: one of the clutch plates is moveable axially, and the clutch plates both comprise at least one tooth facing each other to be brought into contact on axial movement of said one of the clutch plates for engagement of the clutch plates, said teeth of both clutch plates have front faces and rear faces extending from the ends of said teeth, and the magnitude of the inclination of said front faces of said teeth relative to-the forward direction is greater than the magnitude of inclination of said rear faces of said teeth relative to the forward direction, characterised in that: said front faces of said teeth are helical.

The power take-off apparatus according to this aspect of the invention has the advantage that it comprises a clutch that is a dog clutch, so is less likely to slip than the electromagnetic clutches of the prior art. It also has advantages compared to prior art dog clutches. Dog clutches of the prior art are designed to be bi-directional. As such, the clutch plates have symmetrical teeth. This allows for equal power transmission in either direction. However, in the case of a power take-off apparatus such arrangements have disadvantages with respect to engagement and disengagement and wear.

One type of dog clutch of the prior art has symmetrical teeth with surfaces which are parallel to the axis of engagement, the teeth are machined to interlock with a small tolerance to avoid so-called "rattle". However, this makes it difficult to properly engage such clutches because the teeth of the clutch plates may not be correctly aligned to mesh together in the correct way. The clutch either then fails to operate as a positive drive clutch, or the edges of the teeth become worn as the teeth grind over each other to engage properly. Such wear of the teeth can lead to subsequent slippage in use.

Other types of dog clutch of the prior art have symmetrical teeth with inclined surfaces relative to the axis of engagement. Hence, these clutches do not form a positive drive and provide the same torque in both directions of rotation. As such, the clutch may slip if they are overloaded. Slippage can wear the tops of the teeth, which subsequently makes the clutch more prone to slip again.

According to the present invention, the teeth of the clutch have faces with different magnitudes of inclination. That is, the teeth have inclined faces but are asymmetric. Put another way, the slope of the front faces of the teeth is greater than that of the rear faces, although the direction of the slope may be different. This provides improved torque and further reduced slippage, compared to the prior art dog clutches, when the driving clutch plate drives the driven clutch plate in the forward direction through the front faces.

In a preferable embodiment, the front faces of said teeth are arranged to contact one another on engagement of the clutch plates, such that the driving clutch plate is capable of driving the driven clutch plate in the forward direction through the front faces, the front faces being perpendicular to the forward direction or inclined in a direction in which the reaction on rotation of the driving clutch plate in the forward direction forces the clutch plates axially together, and the rear faces are arranged to contact one another on axial movement of said one of the clutch plates, the rear faces being inclined in a direction in which the reaction on relative axial movement of the clutch plates forces relative rotation of the clutch plates to bring the front faces into contact.

The clutch of the power take-off apparatus of this embodiment has the advantage that it provides a positive drive, but has inclined tooth surfaces. As such, there is reduced tooth grinding compared to prior art clutches with symmetrical teeth with faces parallel to the axis of engagement. Further, there is reduced slippage compared with symmetrical inclined tooth arrangements of the prior art.

Preferably, said front faces are inclined in a direction in which the reaction on rotation of the driving clutch plate in the forward direction forces the clutch plates axially together. This produces an overhang in the tooth shape, further reducing the chance of slippage.

Preferably, rear faces of the teeth of the power take-off apparatus of the present invention are helical. This provides the advantage that the faces of teeth on opposing clutch plates slide over each other without grinding when the clutch is engaged or disengaged.

The power take-off apparatus preferably further comprises a lever for moving the one of the clutch plates that is moveable axially. The lever is preferably sufficiently flexible to accommodate the maximum relative axial movement of the clutch plates on sliding of said rear faces over one another in contact to bring said front faces of the clutch plates into contact. This reduces the chance that, when the clutch is engaged, the clutch plates become jammed together before the teeth of the opposing clutch plates slide over each other into the fully engaged position. As such, if the driven clutch plate is free to rotate, the clutch will become fully engaged when the clutch plates are brought together. Alternatively, if the driven clutch plate does not rotate when the clutch plates are brought together, the clutch will become fully engaged on start up of the power take-off apparatus.

It will be appreciated that the advantages pertaining to the clutch of the power take-off apparatus discussed above may also be of benefit in other situations where a mono-directional clutch could be used. As such, according to another aspect of the invention there is provided the clutch in isolation.

In order that the present invention may more readily be understood, the following description is given, by way of example only, with reference to the accompanying drawings, in which:
Fig. 1 is a schematic side elevational view, partly in section, of a power take-off apparatus, with a clutch in an engaged position, including an expanded view of the engaged clutch teeth;
Fig. 2 is a schematic side elevational view, partly in section, of the power take-off apparatus, with a clutch in a disengaged position, including an expanded view of the disengaged clutch teeth;
Fig. 3 is a perspective view of the clutch plates of the clutch.

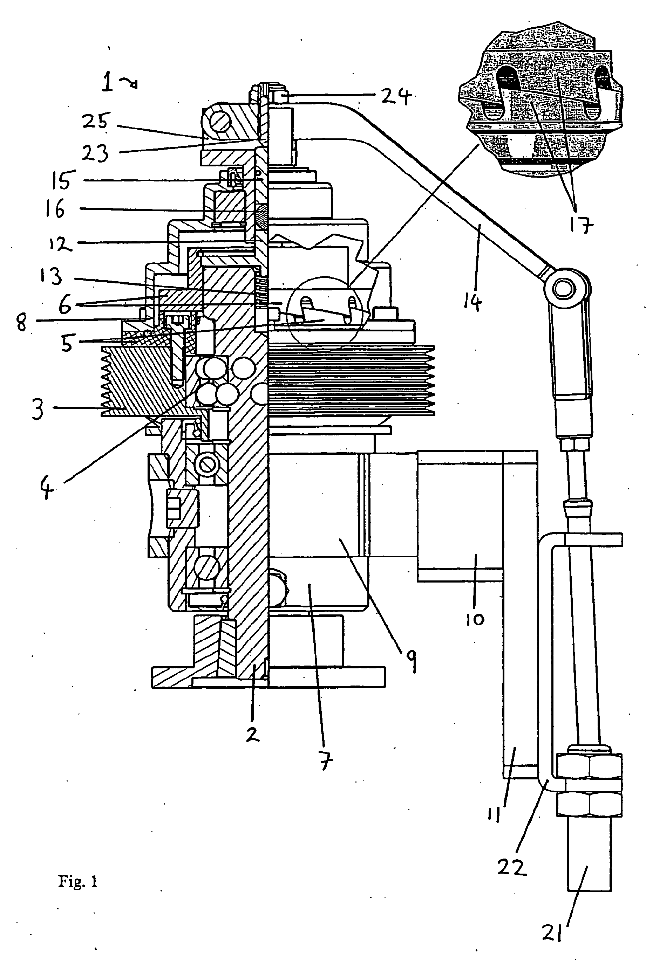

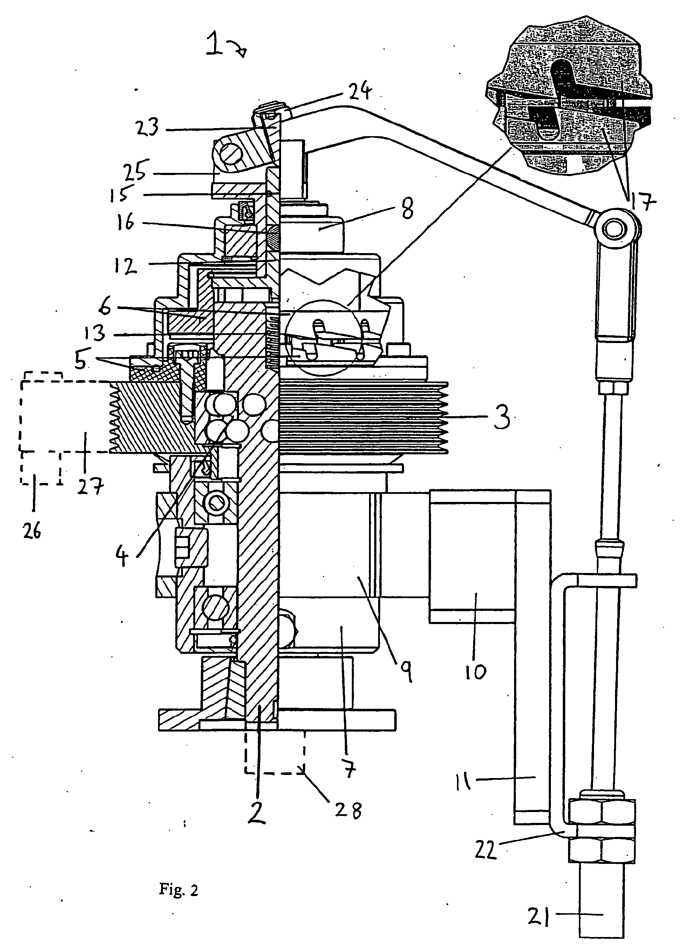

Figs. 1 and 2 show a power take-off apparatus 1 according to an embodiment of the present invention. The power take-off apparatus 1 has a spline shaft 2, as can be seen in the half section. The spline shaft 2 extends through a pulley 3. The axes of rotation of the pulley 3 and the spline shaft 2 are coaxial. The pulley 3 is mounted on a bearing 4 around the spline shaft 2. The spline shaft 2 and bearing 4 are enclosed within a housing 7. The housing is attached to a mounting block 10 on an engine plate 11 via a housing mount 9. A first end of the spline shaft 2 is accessible, through the housing 7, to be connected to an external apparatus 28, as shown schematically in Fig. 2. The external apparatus 28 could be any sort of apparatus, for example a compressor or electrical generator.

The power take-off apparatus 1 also includes a clutch comprising a driving clutch plate 5 and a driven clutch plate 6. A driving clutch plate 5 of the clutch is mounted on the pulley 3. As such, the driving clutch plate 5 rotates when the pulley 3 is rotated. As shown in Fig. 1, the driving clutch plate may be mounted to the pulley 3 using screws, but any other method of attachment may be used. Fig. 2 shows schematically that the pulley 3 attached to an engine 26 by a belt 27. However, any other method of coupling the pulley 3 to an external engine could be used.

The driven clutch plate 6 fits around the second end of the spline shaft 2, and is operably engaged with the spline shaft 2 via the splines (not shown) of the spline shaft 2. The driven clutch plate 6 is axially moveable relative to the spline shaft 2, whilst remaining operably engaged with the spline shaft 2 via the splines. Therefore, the driven clutch plate 6 is operably engaged with the spline shaft 2 in both the engaged and disengaged positions as shown in Figs. 1 and 2. The driven clutch plate 6 is also attached, coaxially, to a selector spindle 12 that covers the second end of the spline shaft 2. The second end of the spline shaft 2 has an axial hole in which is contained a spring 13. The selector spindle 12 contacts the spring 13 and holds the spring 13 in the hole of the spline shaft 2.

The driven clutch plate 6 is covered by a drive cap 8 which is attached to the driving clutch plate 5. The end of the drive cap 8 has a tubular opening that is coaxial with the axes of rotation of the spline shaft 2, pulley 3 and clutch plates 5,6. In the opening are disposed a spindle 15 and a ball bearing 16, and an end of the selector spindle 12 also projects into the hole from within the drive cap 8. Ball bearing 16 is in contact with both the spindle 15 and the selector spindle 12, and is also free to rotate within the opening of the drive cap 8. As such, the selector spindle 12 and the driven clutch plate 6 are free to rotate independently of the drive cap 8, when the clutch of the power take-off apparatus 1 is in the disengaged position as shown in Fig. 2.

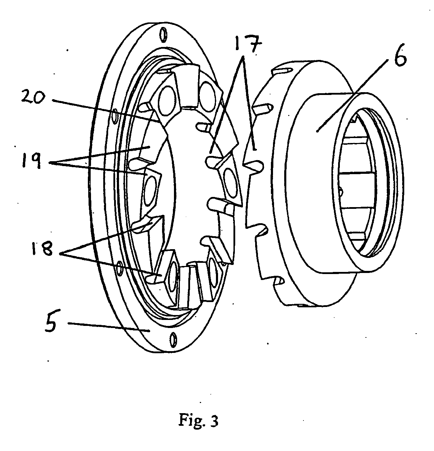

The driving and driven clutch plates 5, 6 are axially aligned with clutch plate surfaces facing each other. The clutch plate surfaces each have a series of teeth 17, which can be more clearly seen in Fig. 3. The number of teeth 17 on each surface is the same. The number of teeth must be at least one tooth on each plate, but there is no upper limit to the number of teeth, other than that imposed by machining constraints. Each tooth 17 has a front face 18 and a rear face 19. The ridge 20 of a tooth 17 is formed where the front face 18 and the rear face 19 meet. The line of the ridge 20 of each tooth 17 lies on a radius of the clutch plate 5, 6 on which the tooth is formed. The front and rear faces 18, 19 of the teeth 17 on each of the driving and driven clutch plates 5, 6 conform with one another.

The rear face 19 of each tooth is inclined in a direction in which the reaction on relative axial movement of the clutch plates 5, 6 forces relative rotation of the clutch plates 5, 6 about the axis to bring the front faces 19 into contact (i.e. rearwards from the top of the teeth 17 of the driving clutch plate 5).

The rear face 19 of each tooth 17 is helical. This allows the rear faces 19 of the teeth 17 on each clutch plate 5,6 to slide over each other whilst remaining in contact when the clutch is engaged, as discussed below. In this embodiment, the helical surface radially extends perpendicular to the axis. However, this is not essential. As an alternative, it would be possible for the surface to be inclined relative to a line perpendicular to the axis. Nonetheless, in this case, the helical face has the same pitch (that is, the same displacement along the axis of rotation per revolution) at different radii.

Due to the helical nature of the rear face 19 of the present embodiment, the angle of inclination of the rear face 19 to the axis of rotation is different at different radii, but the pitch of the rear face 19 is the same. Therefore, the rear face is best described by its pitch, rather than by an angle. When considering a narrow and/or short surface, it may be difficult to perceive and changes in inclination across the surface.

The pitch of the rear face 19 is relatively shallow. Preferably, the pitch is in the range from 20 to 100 mm per revolution, and more preferably is 40 mm per revolution, with respect to the axis of rotation of the clutch plate 5, 6 on which the tooth 17 is formed.

The front face 18 of each tooth 17 is inclined in a direction in which the reaction on rotation of the driving clutch plate 5 in the forward direction forces the clutch plates 5,6 axially together (i.e. rearwards from the top of the teeth 17 of the driving clutch plate 5). However, the front face 18 is steeper than (has a higher pitch than) the rear face 17.

The front face 18 of each tooth 17 is also helical. This allows the front faces 18 of the teeth 17 on each clutch plate 5,6 to slide over each other whilst remaining in contact when the clutch is disengaged as discussed below.

Preferably the pitch is equal to or greater than 500 mm per revolution, with respect to the axis of rotation of the clutch plate 5, 6 on which the tooth 17 is formed. The pitch could be so steep as to be parallel to the axis of rotation of the clutch plate 5, 6. As such, the front face 18 would be perpendicular to the forward direction of motion. More preferably, the pitch of the front face 18 of a tooth 17 is 1000 mm per revolution with respect to the axis of rotation of the clutch plate 5,6.

It should be noted that the teeth 17 of the clutch plates 5,6 are asymmetric: the pitches of the forward and rear faces 18, 19 are different, although in the same direction (i.e. rearwards from the top of the teeth 17 of the driving clutch plate 5). As such, the teeth 17 allow for a positive drive when the clutch plates 5, 6 are engaged and turned in one direction, but not in the other. The clutch is designed to transmit power when turning in a direction of motion that utilises the positive drive, which is the direction of rotation that urges together the front faces 18 of teeth 17 on opposing clutch plates 5,6. The skilled reader will appreciate that such clutches can be produced with faces 18,19 pitched in the reverse direction to that shown in Figs. 1 and 2, to form a positive drive for use in the opposite direction of rotation.

The power take off apparatus of Figs. 1 and 2 further comprises a lever 14, attached to pivot on a lever mount 25 on the drive cap 8. The lever 14 is shown connected to a Bowden cable 21, which is used to operate the lever 14. The Bowden cable 21 is preferably operated by a mechanism that allows the Bowden cable 21 to be locked in either the engaged or disengaged position. However, the Bowden cable 21 is not essential, and alternative embodiments may utilise different means of operating the lever 14, for example using hydraulic, pneumatic or electrical actuators. The Bowden cable 21 is mounted via a cable mount 22 to the engine plate 11. The Bowden cable may be actuated either mechanically or electrically. The Bowden cable 21 is secured via a cable mount 22 to the engine plate 11, and is connected to the end of the lever 14.

A screw 23 is disposed in the end of the lever 14 and held in place by a nut 24. The end of the screw 23 contacts the spindle 15, which is disposed in the end of the drive cap 8 through which movement of the lever 14 drives axial movement of the driven clutch plate 6.

The operation of engaging the clutch in the embodiment of Figs. 2 and 3 is performed when whilst the driving clutch plate 5 is stationary and involves axially moving the driven clutch plate 6. This brings the clutch plates 5,6 into contact with each other, and produces a reaction force that rotates the driven clutch plate 6 as it moves further axially to lock teeth 17 with the driving clutch plate 5.

Starting from a disengaged position, as in Fig. 2, the driven clutch plate 6 is moved axially by pulling on the Bowden cable 21, whilst the driving clutch plate 5 is stationary. This, in turn, pulls on the lever 14, which is rotated about its connection to the lever mount 25 towards the drive cap 8. The rotation pushes a screw 23, which is disposed in the end of the lever and held in place by a nut 24, in an axial direction onto the spindle 15 through the opening in the end of the drive cap 8. That is, the spindle 15 is pushed, and moves, downwards in the configuration shown in Fig. 2. The spindle 15 pushes down on the ball bearing 16 and the selector spindle 12. The movement of the spindle 15, ball bearing 16 and selector spindle 12 compresses the spring 13 in the hole in the end of the spline shaft 2.

The movement of the selector spindle 12 also causes the driven clutch plate 6, to which the spindle 12 is attached, to be moved into contact with the driving clutch plate 5. More precisely, the rear faces 19 of the teeth 17 of each clutch plate 5,6 are brought into contact with each other.

Because the rear faces 19 of the teeth 17 are inclined, the contact forces acting on the rear faces 19 force the clutch plates to rotate. The rear faces 19 are inclined in a direction in which the reaction, on relative axial movement of the clutch plates 5,6, forces relative rotation of the clutch plates to bring the front faces 18 into contact. In the embodiment of Fig. 2 the driven clutch plate 6 is free to rotate on the ball bearing 9, so this clutch plate 6 rotates to bring the front faces 18 into contact. This is the opposite direction to that which clutch plate 6 turns when the power take-off apparatus 1 is in operation. That is, the driven clutch plate 6 in the embodiment of Fig. 2 rotates in an anti-clockwise position when looking down at the apparatus from the end of the lever 14.

As the driven clutch plate 6 rotates, it moves further axially towards the driving clutch plate 5 until the front faces 18 of the teeth 17 of the driving clutch plate 5 are in contact with the front faces 18 of the teeth 17 of the driven clutch plate 6. At that point, the driven clutch plate 6 can rotate no further in that direction, and is in the fully engaged position.

The shape of the teeth 17, is therefore advantageous over prior art dog clutches because it allows for the clutch to be put into the fully engaged position every time it is operated without wearing out the ridges 20 of the teeth 17.

In some circumstances, the driven clutch plate 6 may not be free to rotate to bring the front faces 18 into contact when the clutch is being engaged. This would be the case when the external apparatus 28, attached to the driven clutch plate 6 via the spline shaft 12, resists such rotation. Therefore, the lever 12 is further designed to allow the Bowden cable 21 to be locked in the "engaged" position before the front faces 19 of the teeth 17 are in contact, with full engagement being achieved on starting of the power take-off apparatus.

In particular, the lever 12 is designed to be sufficiently flexible so that when it is operated and the clutch plates 5,6 brought into contact, but the driven clutch plate 6 does not rotate, the force transmitted through the driven clutch plate 6 into the driving clutch plate 5 is not so great as to jam the clutch plates 5,6 together. Instead, the arm of the lever 12 bends, to allow the Bowden cable 21 to be locked in the engaged position, even though the clutch plates 5,6 are not in the fully engaged position (that is, even though the front faces 18 of the teeth 17 of the clutch plates 5,6 are not in contact). Then, when the power take-off apparatus 1 is started (as described later) and the driving clutch plate 5 is turned, the rear faces 19 of the teeth 17 of the clutch plates 5,6 can slide over each other. As such, the driven clutch plate 6 moves further axially towards the driving clutch plate 5 until the front faces 18 of the teeth 17 of the driving clutch plate 5 are in contact with the front faces 18 of the teeth 17 of the driven clutch plate 6. As the driven clutch plate 5 moves axially, the lever arm unbends.

The clearance between clutch plates 5,6 in the disengaged position can be adjusted by adjusting the screw 23. Turning the screw 23 to project further into the drive cap 8 will decrease the clearance between the clutch plates 5,6, whilst turning the screw 23 the other way will increase the clearance. Turning the screw 23 to project further into the drive cap 8 also has the effect of increasing the anti-backlash pressure on the driven clutch plate 6.

In operation, the power take-off apparatus 1 is connected to, for example, a vehicle engine 26. As in Fig. 2, a belt 27 may be connected from the engine to the pulley 3 of the power take-off apparatus 1. When the clutch is in the engaged position, the front faces 18 of the teeth 17 of the clutch plates 5,6 are in contact, as in Fig. 1. Once the clutch is engaged and the engine is started, the belt turns the pulley 3, which in also turns the driving clutch plate 5 which is connected to the pulley 3. The drive cap 8, which is attached to the driving clutch plate 5, is also turned. In the embodiment of Fig. 1, the pulley 3 is turned in the clockwise direction when looking down at the apparatus from the end of the lever 14. The driving clutch plate 5 transmits torque and drives the driven clutch plate 5 in the forward direction through the front faces of the teeth 17 of each clutch plate 5,6. Therefore, the driven clutch plate 6 is also rotated. The direction of inclination of the front faces 18 of the teeth 19 is such that the reaction on rotation of the driving clutch plate 6 in the forward direction forces the clutch plates 5,6 axially together.

This is advantageous over symmetrical clutch teeth of the prior art which have inclined surfaces, because the inclination of those faces is such that the reaction on rotation of a driving clutch plate in the forward direction forces the clutch plates axially apart. Also, because the teeth 17 of the clutch plates 5,6 overlap axially, and are inclined to create an overhang on the front face 18 side, the clutch will not slip even if the ridges 20 of the teeth 17 are slightly worn.

Because the driven clutch plate 6 is engaged with the spline shaft 2, turning the driven clutch plate 6 also rotates the spline shaft 2. The first end of the spline shaft 2 is connected to an external apparatus 28, and the rotation of the spline shaft 2 drives that external apparatus 28.

The operation of disengaging the clutch of the power take-off apparatus 1 performed when whilst the driving clutch plate 5 is stationary. The tension in the Bowden cable 21 is released. The spring 13 then forces the selector spindle 12 and driven clutch plate 6 away from the driving clutch plate 5. This also pushes the ball bearing 16 and spindle 15 away from the driving clutch plate 5. Further, the lever 14 is rotated, via the action of the spindle 15 on the screw 23, away from the drive cap 8.

The inclined faces 18, 19 allow for the clutch plates 5, 6 to disengage without becoming jammed, even if the clutch is still under some load from the pulley. The axial force from the spring 13 has a component acting through the front faces 18, which cause the driven clutch plate to rotate as it disengages in a direction which allows the clutch plates 5,6 to axially separate, allowing the teeth 17 to un-mesh. This is advantageous over dog-clutches of the prior art because it avoids jamming of the clutch when disengaging.

## Claims

1. A power take-off apparatus (1), comprising:
a rotatable power input member (3) capable of being rotated by an engine;
a rotatable power output member (2) capable of driving an external apparatus; and
a clutch for transmitting power from the rotatable power input member to the rotatable power output member, said clutch comprising a driving clutch plate (5) and a driven clutch plate (6), each rotatable about a common axis, said driving clutch plate being for driving said driven clutch plate in a forward direction about the axis, wherein:
one of the clutch plates (6) is moveable axially, and the clutch plates both comprise at least one tooth (17) facing each other to be brought into contact on axial movement of said one of the clutch plates for engagement of the clutch plates,
said teeth of both clutch plates have front faces (18) and rear faces (19) extending from the ends of said teeth, and
the magnitude of the inclination of said front faces of said teeth relative to the forward direction is greater than the magnitude of inclination of said rear faces of said teeth relative to the forward direction;
**characterised in that**:
said front faces of said teeth are helical.

2. The power take-off apparatus of claim 1, wherein:
said front faces of said teeth are arranged to contact one another on engagement of the clutch plates, such that said driving clutch plate is capable of driving said driven clutch plate in the forward direction through said front faces, said front faces being perpendicular to the forward direction or inclined in a direction in which the reaction on rotation of the driving clutch plate in the forward direction forces the clutch plates axially together, and
said rear faces being arranged to contact one another on axial movement of said one of the clutch plates, said rear faces being inclined in a direction in which the reaction on relative axial movement of the clutch plates forces relative rotation of the clutch plates to bring the front faces into contact.

3. The power take-off apparatus according to claim 1 or 2, wherein said front faces of said teeth are inclined in a direction in which the reaction on rotation of the driving clutch plate in the forward direction forces the clutch plates axially together.

4. The power take-off apparatus according to any one of the previous claims,
wherein said front faces are inclined relative to said axis with a pitch of greater than 500 mm per revolution.

5. The power take-off apparatus according to any one of the previous claims, wherein said rear faces of said teeth are helical.

6. The power take-off apparatus according to any one of the previous claims, wherein said rear faces are inclined relative to said axis with a pitch in the range from 20 mm to 100 mm per revolution.

7. The power take-off apparatus according to any one of the previous claims, further comprising a lever (14) for moving said one of the clutch plates that is moveable axially.

8. The power take-off apparatus according to claim 7, wherein said lever is sufficiently flexible to accommodate the maximum relative axial movement of the clutch plates on sliding of said rear faces over one another in contact to bring said front faces of the clutch plates into contact.

9. The power take-off apparatus according to any one of the previous claims, further comprising a drive cap (8) which covers said one of said clutch plates and is attached to the other one of the clutch plates.

10. The power take-off apparatus according to claim 7 or 8, further comprising a drive cap which covers said one of said clutch plates and is attached to the other one of the clutch plates, and wherein said lever pivots against said drive cap.

11. The power take-off apparatus according to any one of the previous claims, wherein said driven clutch plate is said one of the clutch plates that is axially moveable.

12. The power take-off apparatus according to any one of the previous claims, wherein said power output member is a shaft, and said driven clutch plate bears upon said shaft.

13. The power take-off apparatus according to any one of the previous claims, wherein said power input member is a pulley, and said driving clutch plate is attached to said pulley.

14. A clutch comprising a driving clutch plate (5) and a driven clutch plate (6), each rotatable about a common axis, said driving clutch plate being for driving said driven clutch plate in a forward direction about the axis, wherein:
one of the clutch plates (6) is moveable axially, and the clutch plates both comprise at least one tooth (17) facing each other to be brought into contact on axial movement of said one of the clutch plates for engagement of the clutch plates,
said teeth of both clutch plates have front faces (18) and rear faces (19) extending from the ends of said teeth, and
the magnitude of the inclination of said front faces of said teeth relative to the forward direction is greater than the magnitude of inclination of said rear faces of said teeth relative to the forward direction;
**characterised in that**:
said front faces of said teeth are helical.

15. The clutch of claim 14, wherein:
said front faces of said teeth are arranged to contact one another on engagement of the clutch plates, such that said driving clutch plate is capable of driving said driven clutch plate in the forward direction through said front faces, said front faces being perpendicular to the forward direction or inclined in a direction in which the reaction on rotation of the driving clutch plate in the forward direction forces the clutch plates axially together, and
said rear faces being arranged to contact one another on axial movement of said one of the clutch plates, said rear faces being inclined in a direction in which the reaction on relative axial movement of the clutch plates forces relative rotation of the clutch plates to bring the front faces into contact.

## Patentansprüche

1. Kraftübertragungsvorrichtung (1) umfassend:
ein drehbares Antriebskraft-Eingabeelement (3), welches geeignet ist, von einer Maschine gedreht zu werden;
ein drehbares Antriebskraft-Ausgabeelement (2), welches geeignet ist, eine externe Vorrichtung anzutreiben; und
eine Kupplung zum Übertragen einer Antriebskraft von dem drehbaren Antriebskraft-Eingabeelement zu dem drehbaren Antriebskraft-Ausgabeelement, wobei die Kupplung eine antreibende Kupplungsplatte (5) und eine angetriebene Kupplungsplatte (6) umfasst, welche jeweils um eine gemeinsame Achse drehbar sind, wobei die antreibende Kupplungsplatte für ein Antreiben der angetriebenen Kupplungsplatte in einer Vorwärtsrichtung um die Achse vorgesehen ist, wobei:
eine der Kupplungsplatten (6) axial beweglich ist, und wobei die Kupplungsplatten beide mindestens einen Zahn (17) umfassen, welche einander gegenüberliegen, um bei einer axialen Bewegung der einen der Kupplungsplatten für einen Eingriff der Kupplungsplatten in Kontakt gebracht zu werden,
die Zähne der beiden Kupplungsplatten Vorderflächen (18) und Rückflächen (19) aufweisen, welche sich von den Enden der Zähne erstrecken, und
die Größe der Neigung der Vorderflächen der Zähne relativ zu der Vorwärtsrichtung größer als die Größe der Neigung der Rückflächen der Zähne relativ zu der Vorwärtsrichtung ist;
**dadurch gekennzeichnet, dass**:
die Vorderflächen der Zähne spiralförmig sind.

2. Kraftübertragungsvorrichtung nach Anspruch 1, wobei:
die Vorderflächen der Zähne ausgestaltet sind, bei einem Eingriff der Kupplungsplatten derart einander zu kontaktieren, dass die antreibende Kupplungsplatte geeignet ist, die angetriebene Kupplungsplatte in der Vorwärtsrichtung über die Vorderflächen anzutreiben, wobei die Vorderflächen senkrecht zu der Vorwärtsrichtung oder in einer Richtung geneigt sind, in welcher die Rückwirkung auf eine Drehung der antreibenden Kupplungsplatte in der Vorwärtsrichtung die Kupplungsplatten axial zusammenzwängt, und
die Rückflächen ausgestaltet sind, bei einer axialen Bewegung der einen der Kupplungsplatten einander zu kontaktieren, wobei die Rückflächen in einer Richtung geneigt sind, in welcher die Rückwirkung auf eine relative axiale Bewegung der Kupplungsplatten eine relative Drehung der Kupplungsplatten erzwingt, um die Vorderflächen in Kontakt zu bringen.

3. Kraftübertragungsvorrichtung nach Anspruch 1 oder 2, wobei die Vorderflächen der Zähne in einer Richtung geneigt sind, in welcher die Rückwirkung auf eine Drehung der antreibenden Kupplungsplatte in der Vorwärtsrichtung die Kupplungsplatten axial zusammendrückt.

4. Kraftübertragungsvorrichtung nach einem der vorhergehenden Ansprüche,
wobei die Vorderflächen relativ zu der Achse mit einer Steigung von mehr als 500 mm pro Umdrehung geneigt sind.

5. Kraftübertragungsvorrichtung nach einem der vorhergehenden Ansprüche, wobei die Rückflächen der Zähne spiralförmig sind.

6. Kraftübertragungsvorrichtung nach einem der vorhergehenden Ansprüche, wobei die Rückflächen relativ zu der Achse mit einer Steigung in dem Bereich von 20 mm bis 100 mm pro Umdrehung geneigt sind.

7. Kraftübertragungsvorrichtung nach einem der vorhergehenden Ansprüche, ferner umfassend einen Hebel (14) zum Bewegen der einen der Kupplungsplatten, welche axial beweglich ist.

8. Kraftübertragungsvorrichtung nach Anspruch 7, wobei der Hebel ausreichend flexibel ist, um die maximale relative axiale Bewegung der Kupplungsplatten bei einem Gleiten der Rückflächen in Kontakt übereinander aufzunehmen, um die Vorderflächen der Kupplungsplatten in Kontakt zu bringen.

9. Kraftübertragungsvorrichtung nach einem der vorhergehenden Ansprüche, ferner umfassend eine Antriebskappe (8), welche die eine der Kupplungsplatten bedeckt und an der anderen der Kupplungsplatten angebracht ist.

10. Kraftübertragungsvorrichtung nach Anspruch 7 oder 8, ferner umfassend eine Antriebskappe, welche die eine der Kupplungsplatten bedeckt und an der anderen der Kupplungsplatten angebracht ist, und wobei der Hebel gegen die Antriebskappe schwenkt.

11. Kraftübertragungsvorrichtung nach einem der vorhergehenden Ansprüche, wobei die angetriebene Kupplungsplatte die eine der Kupplungsplatten ist, welche axial beweglich ist.

12. Kraftübertragungsvorrichtung nach einem der vorhergehenden Ansprüche, wobei das Antriebskraft-Ausgabeelement eine Welle ist, und wobei die angetriebene Kupplungsplatte auf der Welle gelagert ist.

13. Kraftübertragungsvorrichtung nach einem der vorhergehenden Ansprüche, wobei das Antriebskraft-Eingabeelement eine Scheibe ist, und wobei die antreibende Kupplungsplatte an der Scheibe angebracht ist.

14. Kupplung umfassend eine antreibende Kupplungsplatte (5) und eine angetriebene Kupplungsplatte (6), welche jeweils um eine gemeinsame Achse drehbar sind, wobei die antreibende Kupplungsplatte für ein Antreiben der angetriebenen Kupplungsplatte in einer Vorwärtsrichtung um die Achse vorgesehen ist, wobei:
eine der Kupplungsplatten (6) axial beweglich ist, und die Kupplungsplatten beide mindestens einen Zahn (17) umfassen, welche einander gegenüber liegen, um bei einer axialen Bewegung der einen der Kupplungsplatten für einen Eingriff der Kupplungsplatten in Kontakt gebracht werden,
die Zähne der beiden Kupplungsplatten Vorderflächen (18) und Rückflächen (19) aufweisen, welche sich von den Enden der Zähne erstrecken, und
die Größe der Neigung der Vorderflächen der Zähne relativ zu der Vorwärtsrichtung größer als die Größe der Neigung der Rückflächen der Zähne relativ zu der Vorwärtsrichtung ist;
**dadurch gekennzeichnet, dass**:
die Vorderflächen der Zähne spiralförmig sind.

15. Kupplung nach Anspruch 14, wobei:
die Vorderflächen der Zähne ausgestaltet sind, bei einem Eingriff der Kupplungsplatten einander derart zu kontaktieren, dass die antreibende Kupplungsplatte geeignet ist, die angetriebene Kupplungsplatte in der Vorwärtsrichtung über die Vorderflächen anzutreiben, wobei die Vorderflächen senkrecht zu der Vorwärtsrichtung oder in einer Richtung geneigt sind, in welcher die Rückwirkung auf eine Drehung der antreibenden Kupplungsplatte in der Vorwärtsrichtung die Kupplungsplatten axial zusammenzwängt, und
die Rückflächen ausgestaltet sind, bei einer axialen Bewegung der einen der Kupplungsplatten einander zu kontaktieren, wobei die Rückflächen in einer Richtung geneigt sind, in welcher die Rückwirkung auf eine relative axiale Bewegung der Kupplungsplatten eine relative Drehung der Kupplungsplatten erzwingt, um die Vorderflächen in Kontakt zu bringen.

## Revendications

1. Dispositif de prise de force (1) comprenant :
un organe d'entrée de puissance rotatif (3) pouvant être mis en rotation par un moteur ;
un organe de sortie de puissance rotatif (2) pouvant entraîner un dispositif extérieur ; et
un embrayage permettant de transmettre la puissance de l'organe d'entrée de puissance rotatif à l'organe de sortie de puissance rotatif, ledit embrayage comprenant un disque d'embrayage menant (5) et un disque d'embrayage mené (6), tous deux rotatifs autour d'un axe commun, ledit disque d'embrayage menant servant à entraîner ledit disque d'embrayage mené dans une direction avant autour de l'axe, dans lequel :
un des disques d'embrayage (6) est mobile axialement, et les disques d'embrayage comprennent tous les deux au moins une dent (17) face à face destinées à être mises en contact lors du mouvement axial dudit un des disques d'embrayage pour la mise en prise des disques d'embrayage,
lesdites dents des deux disques d'embrayage ont des faces avant (18) et des faces arrière (19) s'étendant depuis les extrémités desdites dents, et
l'amplitude de l'inclinaison desdites faces avant des dents par rapport à la direction avant est supérieure à l'amplitude de l'inclinaison desdites faces arrière des dents par rapport à la direction avant ;
**caractérisé en ce que** :
lesdites faces avant des dents sont hélicoïdales.

2. Dispositif de prise de force selon la revendication 1, dans lequel :
lesdites faces avant des dents sont agencées de façon à entrer en contact entre elles lors de la mise en prise des disques d'embrayage, de sorte que ledit disque d'embrayage menant est apte à entraîner ledit disque d'embrayage mené dans la direction avant par l'intermédiaire desdites faces avant, lesdites faces avant étant perpendiculaires à la direction avant ou inclinées dans une direction dans laquelle la réaction à la rotation du disque d'embrayage menant dans la direction avant presse les disques d'embrayage axialement l'un contre l'autre, et
lesdites faces arrière étant agencées de façon à entrer en contact entre elles lors du mouvement axial dudit un des disques d'embrayage, lesdites faces arrière étant inclinées dans une direction dans laquelle la réaction au mouvement axial relatif des disques d'embrayage provoque la rotation relative des disques d'embrayage pour mettre en contact les faces avant.

3. Dispositif de prise de force selon la revendication 1 ou 2, dans lequel lesdites faces avant des dents sont inclinées dans une direction dans laquelle la réaction à la rotation du disque d'embrayage menant dans la direction avant presse les disques d'embrayage axialement l'un contre l'autre.

4. Dispositif de prise de force selon l'une quelconque des revendications précédentes, dans lequel lesdites faces avant sont inclinées par rapport audit axe avec un pas supérieur à 500 mm par tour.

5. Dispositif de prise de force selon l'une quelconque des revendications précédentes, dans lequel lesdites faces arrière des dents sont hélicoïdales.

6. Dispositif de prise de force selon l'une quelconque des revendications précédentes, dans lequel lesdites faces arrière sont inclinées par rapport audit axe avec un pas compris dans l'intervalle de 20 mm à 100 mm par tour.

7. Dispositif de prise de force selon l'une quelconque des revendications précédentes, comprenant en outre un levier (14) pour déplacer ledit un des disques d'embrayage qui est mobile axialement.

8. Dispositif de prise de force selon la revendication 7, dans lequel ledit levier est suffisamment flexible pour supporter le déplacement axial relatif maximum des disques d'embrayage lors du glissement desdites faces arrière l'une sur l'autre en contact pour mettre en contact lesdites faces avant des disques d'embrayage.

9. Dispositif de prise de force selon l'une quelconque des revendications précédentes, comprenant en outre un chapeau d'entraînement (8) qui couvre ledit un des disques d'embrayage et est fixé à l'autre des disques d'embrayage.

10. Dispositif de prise de force selon la revendication 7 ou 8, comprenant en outre un chapeau d'entraînement qui couvre ledit un des disques d'embrayage et est fixé à l'autre des disques d'embrayage, et dans lequel ledit levier pivote contre ledit chapeau d'entraînement.

11. Dispositif de prise de force selon l'une quelconque des revendications précédentes, dans lequel ledit disque d'embrayage mené est ledit un des disques d'embrayage qui est mobile axialement.

12. Dispositif de prise de force selon l'une quelconque des revendications précédentes, dans lequel ledit organe de sortie de puissance est un arbre, et ledit disque d'embrayage mené est lié audit arbre.

13. Dispositif de prise de force selon l'une quelconque des revendications précédentes, dans lequel ledit organe d'entrée de puissance est une poulie, et ledit disque d'embrayage menant est fixé à ladite poulie.

14. Embrayage comprenant un disque d'embrayage menant (5) et un disque d'embrayage mené (6), tous deux rotatifs autour d'un axe commun, ledit disque d'embrayage menant servant à entraîner ledit disque d'embrayage mené dans une direction avant autour de l'axe, dans lequel :
un des disques d'embrayage (6) est mobile axialement, et les disques d'embrayage comprennent tous les deux au moins une dent (17) face à face destinées à être mises en contact lors du mouvement axial dudit un des disques d'embrayage pour la mise en prise des disques d'embrayage,
lesdites dents des deux disques d'embrayage ont des faces avant (18) et des faces arrière (19) s'étendant depuis les extrémités desdites dents, et
l'amplitude de l'inclinaison desdites faces avant des dents par rapport à la direction avant est supérieure à l'amplitude de l'inclinaison desdites faces arrière des dents par rapport à la direction avant ;
**caractérisé en ce que** :
lesdites faces avant des dents sont hélicoïdales.

15. Embrayage selon la revendication 14, dans lequel :
lesdites faces avant des dents sont agencées de façon à entrer en contact entre elles lors de la mise en prise des disques d'embrayage, de sorte que ledit disque d'embrayage menant est apte à entraîner ledit disque d'embrayage mené dans la direction avant par l'intermédiaire desdites faces avant, lesdites faces avant étant perpendiculaires à la direction avant ou inclinées dans une direction dans laquelle la réaction à la rotation du disque d'embrayage menant dans la direction avant presse les disques d'embrayage axialement l'un contre l'autre, et
lesdites faces arrière étant agencées de façon à entrer en contact entre elles lors du mouvement axial dudit un des disques d'embrayage, lesdites faces arrière étant inclinées dans une direction dans laquelle la réaction au mouvement axial relatif des disques d'embrayage provoque la rotation relative des disques d'embrayage pour mettre en contact les faces avant.
